(19) Europäisches Patentamt
European Patent Office
Office européen des brevets

(11) **EP 4 303 478 A1**

(12) **EUROPEAN PATENT APPLICATION**
published in accordance with Art. 153(4) EPC

(43) Date of publication:
**10.01.2024 Bulletin 2024/02**

(21) Application number: **22820112.5**

(22) Date of filing: **01.06.2022**

(51) International Patent Classification (IPC):
**F16L 59/02** *(2006.01)*

(52) Cooperative Patent Classification (CPC):
**F16L 59/02**

(86) International application number:
**PCT/JP2022/022256**

(87) International publication number:
**WO 2022/259930 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.06.2021 JP 2021096290**

(71) Applicant: **Sumitomo Riko Company Limited
Komaki-shi, Aichi 485-8550 (JP)**

(72) Inventors:
• **NAKANO, Motoyuki
Komaki-shi, Aichi 485-8550 (JP)**
• **KIMPARA, Teruyoshi
Komaki-shi, Aichi 485-8550 (JP)**
• **HIROSE, Kazuki
Komaki-shi, Aichi 485-8550 (JP)**

(74) Representative: **Müller-Boré & Partner
Patentanwälte PartG mbB
Friedenheimer Brücke 21
80639 München (DE)**

(54) **THERMAL INSULATION SHEET**

(57) A thermal insulation sheet (10) according to the present invention comprises: a base material (11) which is in the form of a sheet, while having a thickness of 5 $\mu$m to 50 $\mu$m; and a thermal insulation layer (12) which is arranged on at least one surface of the base material (11). The thermal insulation layer (12) comprises: porous structures, each of which has a skeleton that is composed of a plurality of particles connected to each other, and each of which internally has pores, while having a hydrophobic site at least on the surface among the surface and the inner part thereof; and a binder which connects the porous structures with each other, while having an elongation at break of 200% or more.

FIG. 1

**Description**

Technical Field

The present disclosure relates to a thermal insulation sheet using a porous structure with low thermal conductivity.

Background Art

Conventionally, various thermal insulation materials have been used for the purpose of heat flow control in in-vehicle parts, residential building materials, industrial equipment, and the like. In addition to high thermal insulation, thermal insulation materials are required to have various specifications according to their applications. For example, when a thermal insulation material is arranged around a member with a curved surface, such as a pipe, flexibility such as bendability is required so that the thermal insulation material can be arranged along the shape of the part. When the thermal insulation material is arranged in a limited narrow space inside a housing, thinness is required. In addition, in product transportation applications, relatively great flexibility is required such that the thermal insulation material can be folded or wound when packing a product.

A porous material such as silica aerogel is known as a material for the thermal insulation material. Silica aerogel has a pore structure that has a skeleton composed of a plurality of fine silica particles connected to each other and has a size of approximately 10 nm to 50 nm. The thermal insulation material using silica aerogel can be produced by coating a base material with a liquid composition having silica aerogel and a binder that connects silica aerogel and drying the liquid composition, as described in, for example, Patent Literatures 1 to 3.

Citation List

Patent Literature

Patent Literature 1: PCT Japanese Translation Patent Publication No. 2015-528071
Patent Literature 2: Japanese Patent Laid-Open No. 2020-122544
Patent Literature 3: Japanese Patent Laid-Open No. 2020-139560

SUMMARY OF INVENTION

Technical Problem

Since the binder that connects silica aerogels together has higher thermal conductivity than silica aerogel, when the incorporated amount of the binder is large, thermal insulation is lower, which is disadvantageous. Therefore, in order to improve the thermal insulation, it is necessary to reduce the incorporated amount of the binder and increase the incorporated amount of silica aerogel as much as possible. However, in this case, a physical bonding force between silica aerogels is reduced, and thus the silica aerogels are likely to be separated from each other during deformation such as bending, and cracks are likely to occur.

For example, as described in Patent Literature 1, when a base material is made of a fibrous material such as a nonwoven fabric, the nonwoven fabric is impregnated with a liquid composition containing silica aerogel and a binder and cured. As a result, binding between silica aerogels is reinforced by fibers, which is desirable in terms of suppressing fall-off of silica aerogel and occurrence of cracks. However, as the nonwoven fabric is impregnated with the liquid composition and silica aerogel is supported on the fibers, rigidity of the thermal insulation material as a whole including the base material increases. As a result, the flexibility of the thermal insulation material is lowered, and it becomes difficult to apply the thermal insulation material in applications such as bending, winding, and packaging. In addition, when the base material is made of a fibrous material such as a nonwoven fabric, it is necessary to increase the thickness of the nonwoven fabric to some extent in order to suppress "show-through" in which the liquid composition seeps out to the opposite side through gaps between the fibers. Therefore, there is a limit to how thin the thermal insulation material can be when the base material is included. Incidentally, using a thermal insulation layer alone without a base material is not practical because the thermal insulation layer is fragile and has problems such as silica aerogel falling off. Moreover, when the incorporated amount of the binder is increased in order to suppress fall-off of silica aerogel, desired thermal insulation cannot be obtained.

Paragraph [0050] of Patent Literature 2 describes a sheet-like thermal insulation material having a total thickness of 5 mm, in which a polyethylene terephthalate (PET) film is used as a base material, and a thermal insulation layer containing silica aerogel is formed thereon. In Patent Literature 2, voids are actively created between silica aerogels, and a volume ratio of voids in the thermal insulation layer is 10% or more to 55% or less, thereby suppressing fall-off of silica aerogel and occurrence of cracks (fractures). Patent Literature 2 does not consider thinning of the thermal insulation material including the base material or improvement of flexibility.

Patent Literature 3 describes a thermal insulation material having a three-layer structure of "nonwoven fabric/thermal insulation layer containing silica aerogel/heat reflecting layer." As the heat reflecting layer, an aluminum-deposited film or the like is described. In Patent Literature 3, the heat reflecting layer is added to the configuration of the nonwoven fabric and the thermal insulation layer to reflect the heat radiated from a heat source, thereby improving the thermal insulation. Patent Literature 3 does not consider thinning of the thermal insulation material or improvement of flexibility.

The present disclosure has been made in view of such circumstances, and an objective thereof is to provide a thermal insulation sheet that is thin and has excellent flexibility such as bendability.

Solution to Problem

In order to solve the above problems, a thermal insulation sheet according to the present disclosure includes: a base material in the form of a sheet and having a thickness of 5 $\mu$m or more to 50 $\mu$m or less; and a thermal insulation layer arranged on at least one surface of the base material. The thermal insulation layer includes: a porous structure that has a skeleton composed of a plurality of particles connected to each other, has pores therein, and has a hydrophobic site at least on a surface out of the surface and inside of the porous structure; and a binder that connects the porous structures with each other and has an elongation at break of 200% or more.

Effects of Invention

According to the thermal insulation sheet of the present disclosure, the thickness of the base material is 5 $\mu$m or more to 50 $\mu$m or less. Therefore, the thermal insulation sheet can be thinned. Accordingly, the thermal insulation sheet of the present disclosure can be arranged in a narrow space, and is suitable for parts that require weight reduction and thinning. In addition, when the thickness of the thermal insulation sheet is reduced, the thermal insulation sheet becomes flexible, and thus the thermal insulation sheet can be easily folded or wound. For example, since many resin films are relatively inexpensive, the cost can be reduced by using a resin film as the base material. As described above, in a case where the base material is coated with a liquid composition having a porous structure and a binder and dried to produce a thermal insulation sheet, when a resin film is used as the base material, there are no voids inside the film, making it difficult for vapor to escape. Therefore, compared to the case of using a nonwoven fabric having voids between fibers, the coating film is less likely to dry. Accordingly, when the thickness of the resin film is large, the heating from the base material side is not sufficient, and there is a concern of the heat transfer in the coating film becoming uneven. When the coating film is not heated uniformly, the coating film may swell during drying, or the degree of drying may vary, which may cause cracks. Moreover, when the heating time is lengthened in order to sufficiently dry the coating film, the productivity is lowered. In this respect, according to the thermal insulation sheet of the present disclosure, the thickness of the base material is small, and thus the coating film is likely to be heated uniformly. Therefore, even if a resin film or the like is used as the base material instead of a nonwoven fabric, the thermal insulation sheet can be dried in a relatively short time, and problems during drying are less likely to occur.

According to the thermal insulation sheet of the present disclosure, the elongation at break of the binder that connects the porous structures with each other in the thermal insulation layer is 200% or more. By adopting a flexible binder with high elongation, the thermal insulation layer becomes flexible, and thus the thermal insulation sheet can be easily folded and wound. In addition, since the porous structures are less likely to separate from each other during deformation such as bending, the occurrence of cracks can be suppressed.

BRIEF DESCRIPTION OF DRAWINGS

Fig. 1 is a sectional view in a thickness direction of a thermal insulation sheet of an example.
Fig. 2 is a schematic sectional view of an experimental apparatus used in evaluating bendability.
Fig. 3 is a schematic diagram of an experimental apparatus used in evaluating thermal insulation.

DESCRIPTION OF EMBODIMENTS

Hereinafter, embodiments of a thermal insulation sheet of the present disclosure will be described. In addition, the embodiments are not limited to the following embodiments, and can be implemented in various modifications and improvements that can be made by those skilled in the art.

<Thermal insulation sheet>

A thermal insulation sheet of the present disclosure includes a base material and a thermal insulation layer.

[Base material]

The base material is in the form of a sheet and has a thickness of 5 $\mu$m or more to 50 $\mu$m or less. The thickness of the base material is desirably 10 $\mu$m or more from the viewpoint of strength, and desirably 30 $\mu$m or less from the viewpoint of flexibility. The base material may consist of a single layer, or may be a laminate in which two or more layers of the same material or different materials are laminated. In order to arrange the thermal insulation sheet along the shape of a part, the base material must have flexibility such as bendability. However, from the viewpoint of suppressing excessive elongation of the thermal insulation layer during deformation and suppressing the occurrence of cracks, the elongation at break of the base material is desirably 150% or less.

As the base material, a resin film such as PET, polyimide, polyamide, polyphenylene sulfide (PPS), polyethylene naphthalate (PEN), and polyethylene (PE); a cellophane film made from pulp; and a metal film such as aluminum, an aluminum compound, magnesium, a magnesium compound, stainless steel, silver, titanium, a titanium compound, and tin are suitable. In addition, a metal-deposited film obtained by depositing a metal on the surface of a resin film by vacuum deposition or sputtering is also suitable. Examples of the metal-deposited film include an aluminum-deposited film and a titanium-deposited film. When the base material has a metal layer (vapor-deposited film) and a resin layer (resin film), such as a metal-deposited film, and the thermal insulation layer is arranged on one side of the base material, it may be appropriately determined on which of the metal layer or the resin layer the thermal insulation layer should be arranged in consideration of the usage pattern of the thermal insulation sheet. The metal-deposited film may be a film having a three-layer structure in which a deposited film is further coated with a resin layer from the viewpoint of corrosion suppression and protection of the deposited film. In order to improve the adhesiveness between the base material and the thermal insulation layer, the surface of the base material may be subjected to pretreatment such as a coupling treatment.

[Thermal insulation layer]

A thermal insulation layer is arranged on at least one surface of the base material. The thermal insulation layer may be arranged only on one side of the base material, or may be arranged on both sides. The thickness of the thermal insulation layer is desirably 0.2 mm or more, 0.3 mm or more, or 0.5 mm or more from the viewpoint of ensuring desired thermal insulation. From the viewpoint of flexibility and thinning, the thickness is desirably 1.2 mm or less, 1 mm or less, or 0.7 mm or less. The thermal insulation layer has a porous structure and a binder that connects the porous structures with each other.

(1) Porous structure

The porous structure has a skeleton composed of a plurality of particles connected to each other, and has pores therein. It is desirable that the diameter of the particles (primary particles) forming the skeleton be approximately 2 nm to 5 nm, and the size of the pores formed between the skeletons be approximately 10 nm to 50 nm. Many of the pores are so-called mesopores of 50 nm or less. Since mesopores are smaller than the mean free path of air, air convection is suppressed and heat transfer is inhibited. The shape of the porous structure is not particularly limited, and may be a spherical shape, an irregularly shaped lump shape, or the like, but a chamfered shape or a spherical shape is desirable. In this case, since dispersibility in the liquid is improved, preparation of the composition (thermal insulation layer coating material) for producing the thermal insulation layer is facilitated. In addition, it is possible to increase the filling amount by reducing voids between the porous structures, and to improve the thermal insulation. The porous structure may be used in a produced state, or may be used after being further pulverized. For a pulverizing treatment, a pulverizing device such as a jet mill or a spheroidizing device may be used. By performing the pulverizing treatment, corners of the particles are removed and the particles have a rounded shape. Accordingly, binding is likely to be performed by the binder, and the porous structure is less likely to fall off. In addition, the surface of the thermal insulation layer becomes smooth and cracks are less likely to occur.

The particle size of the porous structure may be relatively small and uniform from the viewpoint of forming a thin thermal insulation layer and smoothing the surface such that cracks are less likely to occur. For example, it is desirable to use a porous structure having a 90% diameter ($D_{90}$) of 150 $\mu$m or less in a particle size distribution. The particle size of the porous structure may be adjusted by removing large particles by a classification treatment such as sieving.

Porous structures include hydrophilic ones having a hydrophilic site on the surface and inside, and hydrophobic ones having a hydrophobic site. Among these, the hydrophilic porous structure is fragile and easily crumbles. In addition, there is a concern of moisture or the like entering and the pores being crushed. Therefore, in the thermal insulation sheet of the present disclosure, a hydrophobic porous structure having a hydrophobic site at least on the surface out of the surface and the inside thereof is used. When a hydrophobic porous structure is used, in a case where an aqueous binder in which water is used as a solvent is used, the binder is less likely to enter the pores of the porous structure, and thus the thermal insulation is less likely to be inhibited. In addition, the surface of the porous structure may be surface-treated with a silane coupling agent or the like. By performing the surface treatment, functions such as hydrophobicity can be imparted to the surface of the porous structure.

The type of the porous structure is not particularly limited. Examples of primary particles include silica, alumina, zirconia, and titania. Among them, from the viewpoint of excellent chemical stability, silica aerogel in which the primary particles are silica, that is, silica aerogel which has a skeleton composed of a plurality of fine silica particles connected to each other, is desirable. Silica aerogel is white and reflects infrared rays. Therefore, when silica aerogel is used, a heat shielding effect can be imparted to the thermal insulation layer.

The method for producing silica aerogel is not particularly limited, and the drying process may be performed at normal pressure or may be performed under supercritical conditions. For example, when the hydrophobization treatment is performed before the drying process, the need for supercritical drying is eliminated, that is, the drying may be performed at normal pressure, and thus production can be performed more easily at a low cost. Due to the difference in drying method when producing aerogel, the one dried at normal pressure may be called "xerogel," and the one dried under supercritical conditions may be called "aerogel," but both are referred to as "aerogels" in the present specification.

The content of the porous structure in the thermal insulation layer may be appropriately determined in consideration of thermal insulation, flexibility, mechanical strength, and the like. For example, from the viewpoint of reducing thermal conductivity (increasing thermal insulation), the content of the porous structure is desirably 80% by volume or more when the volume of the entire thermal insulation layer is 100% by volume. More preferably, the content of the porous structure is 85% by volume or more. On the other hand, when the number of porous structures is increased, the content of the binder correspondingly decreases, and thus there is concern of the flexibility decreasing or the porous structure becoming likely to fall off. Therefore, the content of the porous structure is desirably 96% by volume or less when the volume of the entire thermal insulation layer is 100% by volume. The content of the porous structure is more preferably 92% by volume or less.

(2) Binder

As the binder, one having an elongation at break of 200% or more is used. When the elongation at break is less than 200%, the flexibility of the thermal insulation layer is reduced, and thus cracks are likely to occur during deformation such as bending. The elongation at break of the binder may be measured by a method conforming to JIS K6251:2017. Dumbbell No. 3 (parallel portion thickness 2.0 mm) is used as a test piece. In addition, from the viewpoint of suppressing excessive elongation of the thermal insulation layer during deformation to suppress the occurrence of cracks, the ratio (E2/E1) of the elongation at break (E2) of the binder to the elongation at break (E1) of the base material is desirably 1.33 or more to 30 or less. The elongation at break of the base material may be measured by the same method as for the binder, but the test piece is Dumbbell No. 3 having the same thickness as the base material.

As the binder, it is desirable to use a binder (aqueous binder) which has one or more selected from resin and rubber and uses water (including pure water, tap water, and the like) as a solvent. Examples of the aqueous binder include a water-soluble binder and an emulsion-like binders, and among them, the emulsion-like binder (aqueous emulsion binder) is suitable. The aqueous emulsion binder is emulsified by introducing a surfactant or a hydrophilic group. According to the aqueous emulsion binder, the surfactant and the hydrophilic group volatilize during drying, and accordingly, hydrophilicity is lowered and the water is less likely to be dissolved. Therefore, it is considered that less stickiness occurs after the thermal insulation layer coating material is cured. The emulsification method may be a forced emulsification type using a surfactant as an emulsifier or a self-emulsification type in which a hydrophilic group is introduced.

The glass transition temperature (Tg) of the binder is desirably -5 °C or lower, more desirably -20 °C or lower, from the viewpoint of having high adhesiveness to the porous structure and softening the thermal insulation layer to make cracks less likely to occur. For example, in the case of an aqueous emulsion binder, a resin emulsion or a rubber emulsion may be employed. Examples of the resin include acrylic resin, urethane resin, and a mixture of acrylic resin and urethane resin. Examples of the rubber include styrene-butadiene rubber (SBR), nitrile rubber, silicone rubber, urethane rubber, and acrylic rubber. Urethane resin, styrene-butadiene rubber, and the like are suitable from the viewpoint of making the thermal insulation layer flexible. From the viewpoint of improving the heat resistance of the thermal insulation layer, an acrylic resin or the like is suitable. From the viewpoint of increasing the strength of the binder portion and improving the strength of the thermal insulation layer, a crosslinking agent or the like may be used in combination to crosslink the binder component.

(3) Other components

In addition to the porous structure and the binder, the thermal insulation layer may contain other components such as a crosslinking agent, a thickener, a reinforcing fiber, a flame retardant, and the like. A porous structure having a hydrophobic site on the surface or inside is less likely to be compatible with water. Among them, silica aerogel has a low specific gravity, and thus silica aerogel is likely to float on water. Therefore, it is difficult to disperse silica aerogel in a binder liquid using water as a solvent, and the dispersing process takes time. For example, when a thickener is incorporated, the viscosity of the binder liquid increases, and the porous structure is likely to disperse. Thereby, the time required for dispersing the porous structure can be shortened, and the productivity can be improved. In addition, since flexibility is imparted to the thermal insulation layer, the occurrence of cracks is also suppressed. As the thickener, polysaccharides such as carboxymethyl cellulose (CMC), carboxyethyl cellulose, carboxypropyl cellulose, hydroxyethyl cellulose, hydroxypropyl cellulose, xanthan gum, agarose, and carrageenan; polyvinyl alcohol; polyethylene oxide; glucomannan, and the like may be used.

When the reinforcing fiber is incorporated, the reinforcing fiber is physically entangled around the porous structure, and accordingly, it is possible to improve the mechanical strength of the thermal insulation layer, and to suppress fall-off of the porous structure. Although the type of the reinforcing fiber is not particularly limited, a ceramic fiber such as glass fiber and alumina fiber is suitable in consideration of heat resistance.

When a flame retardant is incorporated, flame retardancy can be imparted to the thermal insulation layer. A halogen-based, phosphorus-based, metal hydroxide-based, and other known flame retardant may be used as the flame retardant. Considering the environmental load, it is desirable to use a phosphorus-based flame retardant. Examples of the phosphorus-based flame retardant include ammonium polyphosphate, red phosphorus, and a phosphate ester. Among them, a water-insoluble one is desirable, and for example, ammonium polyphosphate is preferable, because the flame retardant is less likely to flow out even when the flame retardant comes into contact with moisture during use.

<Method for producing thermal insulation sheet>

The thermal insulation sheet of the present disclosure can be produced by coating the base material with the thermal insulation layer coating material and drying the same. The thermal insulation layer coating material may be prepared by incorporating the porous structure, the binder, and components added as necessary, and stirring the mixture. When the binder does not contain water, the thermal insulation layer coating material may be prepared by adding water as appropriate. When the porous structure is silica aerogel, considering the dispersibility thereof, it is desirable to add a thickener to a binder or a liquid in which a binder is added to water to increase the viscosity of the liquid, and then add silica aerogel. The stirring may be blade stirring, or positive shearing force or ultrasonic waves may be applied. A rotation/revolution stirring device or a media type stirring device may be used.

For coating the thermal insulation layer coating material, brush coating, a coating machine such as a blade coater, a bar coater, a die coater, a comma coater (registered trademark), or a roll coater, or a sprayer may be used. After coating, the coating film may be dried and cured by holding the coating film at a temperature of 80 °C to 150 °C for approximately 0.5 minute to several minutes. For example, when adopting a roll-to-roll method, productivity is improved.

Examples

Next, the present disclosure will be described more specifically with reference to Examples.

<Production of thermal insulation sheet>

[Example 1]

First, silica aerogel (having an average particle size of 90 $\mu$m) having a hydrophobic site on the surface and the inside thereof was pulverized into spheres. The pulverization treatment was performed for 10 minutes at a rotation speed of 4000 rpm using a collision disperser. The pulverized silica aerogel was sieved using a sieve with an opening of 106 $\mu$m to remove large particles. When the particle size distribution of silica aerogel after sieving was measured, the 90% diameter ($D_{90}$) was 92 $\mu$m.

Next, a urethane resin composition ("Evaphanol (registered trademark) HA-55" produced by Nicca Chemical Co., Ltd.) was added to water as an aqueous emulsion binder, and silica aerogel of which the particle size was adjusted was added while stirring with a stirring blade. In this state, stirring was continued for 30 minutes at a rotation speed of 1000 rpm, and then the mixture was allowed to stand for 60 minutes to produce a thermal insulation layer coating material. The binder used has a Tg of -30°C and an elongation at break of 430%.

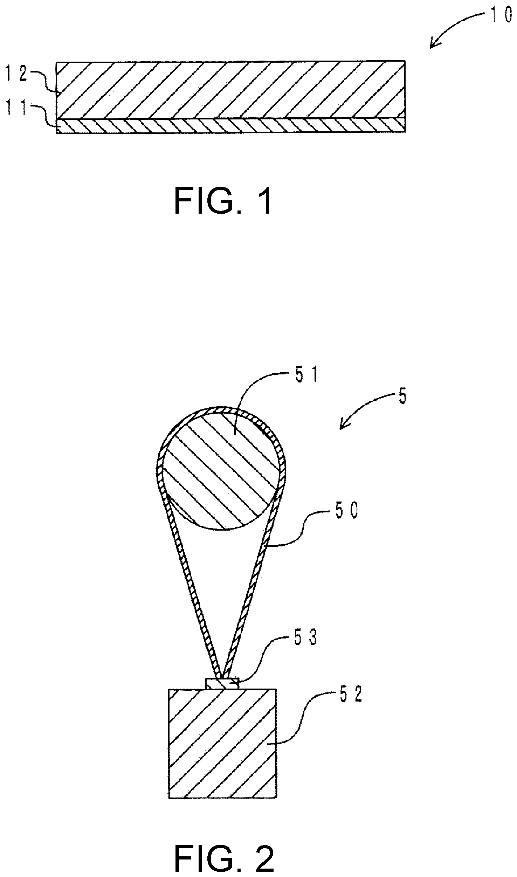

Subsequently, the produced thermal insulation layer coating material was applied to coat a PET film ("Lumirror (registered trademark) #12" produced by Toray Industries, Inc., having a thickness of 12 $\mu$m and an elongation at break of 140%) as a base material using a roll coater. Then, the thermal insulation layer coating material was dried at 150 °C for 1 minute to produce a thermal insulation sheet having a thermal insulation layer thickness of 0.3 mm. Fig. 1 shows a sectional view in the thickness direction of the produced thermal insulation sheet. As shown in Fig. 1, a thermal insulation sheet 10 is composed of a base material 11 and a thermal insulation layer 12 arranged on the upper surface of the base material 11.

The content of silica aerogel in the thermal insulation layer is 90% by volume when the entire thermal insulation layer is 100% by volume. The ratio of the elongation at break (E2) of the binder to the elongation at break (E1) of the base material (E2/E1, hereinafter referred to as the "elongation ratio of the binder to the base material") is 3.1. In addition, the elongation at break of the base material shown in the present example is all elongation in the film molding direction (MD). The produced thermal insulation sheet is called the thermal insulation sheet of Example 1.

[Example 2]

A thermal insulation sheet of Example 2 was produced in the same manner as in Example 1, except that the thickness of the thermal insulation layer was changed to 1 mm.

[Example 3]

A thermal insulation sheet of Example 3 was produced in the same manner as in Example 1, except that the thickness of the base material was changed. A PET film having a thickness of 50 $\mu$m ("Lumirror #50" produced by Toray Industries, Inc., having an elongation at break of 150%) was used as the base material. The elongation ratio of the binder to the base material in the thermal insulation sheet of Example 3 is 2.9.

[Example 4]

A thermal insulation sheet of Example 4 was produced in the same manner as in Example 1, except that the binder was changed and a urethane resin composition having a Tg of -12 °C and an elongation at break of 250% ("Evaphanol HA-190" produced by Nicca Chemical Co., Ltd.) was used. The elongation ratio of the binder to the base material in the thermal insulation sheet of Example 4 is 1.8.

[Example 5]

A thermal insulation sheet of Example 5 was produced in the same manner as in Example 1, except that CMC (having a weight average molecular weight of 380,000) was added as a thickener in addition to the binder and silica aerogel in the production of the thermal insulation layer coating material. The addition amount of CMC was 3 parts by mass with respect to 100 parts by mass of the binder.

[Example 6]

A thermal insulation sheet of Example 6 was produced in the same manner as in Example 1, except that glass fiber (having a fiber diameter of 6.5 $\mu$m) was added as a reinforcing fiber in addition to the binder and silica aerogel in the production of the thermal insulation layer coating material. The addition amount of glass fiber was 16 parts by mass with respect to 100 parts by mass of the binder.

[Example 7]

A thermal insulation sheet of Example 7 was produced in the same manner as in Example 1, except that the material of the base material was changed. A polyimide film ("Kapton (registered trademark) 50H/V" produced by DuPont-Toray Co., Ltd., having a thickness of 12.5 $\mu$m and an elongation at break of 75%) was used as the base material. The elongation ratio of the binder to the base material in the thermal insulation sheet of Example 7 is 5.7.

[Example 8]

A thermal insulation sheet of Example 8 was produced in the same manner as in Example 1, except that the material of the base material was changed. As the base material, an aluminum-deposited PET film ("Dialuster (registered trademark)" produced by Reiko Co., Ltd., having a thickness of 12 $\mu$m and an elongation at break of 100%) was used. The aluminum-deposited PET film was a laminate of a PET film layer (resin layer) and an aluminum-deposited layer (metal layer), and the thermal insulation layer was formed on the PET film layer side. The elongation ratio of the binder to the base material in the thermal insulation sheet of Example 8 is 4.3.

[Example 9]

A thermal insulation sheet of Example 9 was produced in the same manner as in Example 1, except that the material of the base material was changed. A PPS film ("Torelina (registered trademark) #12-3K30" produced by Toray Industries, Inc., having a thickness of 12 $\mu$m and an elongation at break of 82%) was used as the base material. The elongation ratio of the binder to the base material in the thermal insulation sheet of Example 9 is 5.2.

[Example 10]

A thermal insulation sheet of Example 10 was produced in the same manner as in Example 1, except that the material of the base material was changed. A cellophane film ("PL#300" produced by Futamura Chemical Co., Ltd., having a thickness of 25 $\mu$m and an elongation at break of 15%) was used as the base material. The elongation ratio of the binder to the base material in the thermal insulation sheet of Example 10 is 28.7.

[Example 11]

A thermal insulation sheet of Example 11 was produced in the same manner as in Example 1, except that the $D_{90}$ of silica aerogel used was changed. In the thermal insulation sheet of Example 11, silica aerogel pulverized in the same manner as in Example 1 was sieved using a sieve with an opening of 210 $\mu$m, and silica aerogel with $D_{90}$ of 146 $\mu$m was used.

[Example 12]

A thermal insulation sheet of Example 12 was produced in the same manner as in Example 1, except that the binder was changed and an acrylic resin composition having a Tg of -5 °C and an elongation at break of 280% ("AE982" produced by E-TEC) was used. The elongation ratio of the binder to the base material in the thermal insulation sheet of Example 12 is 2.0.

[Comparative Example 1]

A thermal insulation sheet of Comparative Example 1 was produced in the same manner as in Example 1, except that the thickness of the base material was changed. A PET film having a thickness of 75 $\mu$m ("Lumirror #75" produced by Toray Industries, Inc., having an elongation at break of 150%) was used as the base material. The elongation ratio of the binder to the base material in the thermal insulation sheet of Comparative Example 1 is 2.9.

[Comparative Example 2]

A thermal insulation sheet of Comparative Example 2 was produced in the same manner as in Example 1, except that the binder was changed and a urethane resin composition having a Tg of 72 °C and an elongation at break of 87% ("Superflex (registered trademark) 126 produced by Daiichi Kogyo Seiyaku Co., Ltd.) was used. The elongation ratio of the binder to the base material in the thermal insulation sheet of Comparative Example 2 is 0.6.

<Evaluation of thermal insulation sheet>

The state of the thermal insulation layer, bendability, and thermal insulation is evaluated for the produced thermal insulation sheet.

[Evaluation method]

(1) State of thermal insulation layer

The surface of the thermal insulation layer immediately after being coated with the thermal insulation layer coated with the thermal insulation layer coating material and dried was visually observed to confirm the presence or absence of cracks, and the size and depth thereof when cracks were found. Regarding the state of the thermal insulation layer, when there were no cracks, the result was evaluated as extremely good (indicated by the mark ◎ in the evaluation column of Table 1 below), when there were cracks but the cracks were small, and the depth from the surface was less than 90% of the thickness of the thermal insulation layer, the result was evaluated as good (indicated by the mark o in the same column), and when the cracks were large and the depth from the surface was 90% or more of the thickness of the thermal insulation layer, the result was evaluated as bad (indicated by the mark × in the same column).

(2) Bendability

Fig. 2 shows a schematic sectional view of an experimental apparatus used in evaluating bendability. As shown in Fig. 2, an experimental apparatus 5 includes a thermal insulation sheet 50, a round bar member 51, a weight 52, and a clip member 53. The round bar member 51 is made of stainless steel and has a cylindrical shape with a diameter of 50 mm. The round bar member 51 is installed such that the longitudinal direction is horizontal by a jig (not shown). The thermal insulation sheet 50 has a strip shape with a width of 20 mm and a length of 300 mm. The thermal insulation sheet 50 is hung on the round bar member 51 with the thermal insulation layer on the front side. The thermal insulation sheet 50 is bent along the peripheral surface of the round bar member 51. Both end portions in the length direction of the thermal insulation sheet 50 are overlapped and fixed by the clip members 53. The weight 52 is suspended from both end portions in the length direction of the thermal insulation sheet 50 via the clip members 53. The mass of the weight 52 is 1 kg.
One hour after the weight 52 was suspended from the thermal insulation sheet 50, the surface of the thermal insulation layer was visually observed to confirm the presence or absence of cracks, and the size and number of cracks when there were cracks. In addition, when there were no cracks, it was evaluated that the bendability was extremely excellent (indicated by the mark ◎ in the evaluation column of Table 1 below), when there were cracks but the size was small and the number of cracks were small, it was evaluated that the bendability was excellent (indicated by the mark o in the same column), and when there were many cracks, it was evaluated that the bendability was poor (indicated by the mark × in the same column).

(3) Thermal insulation

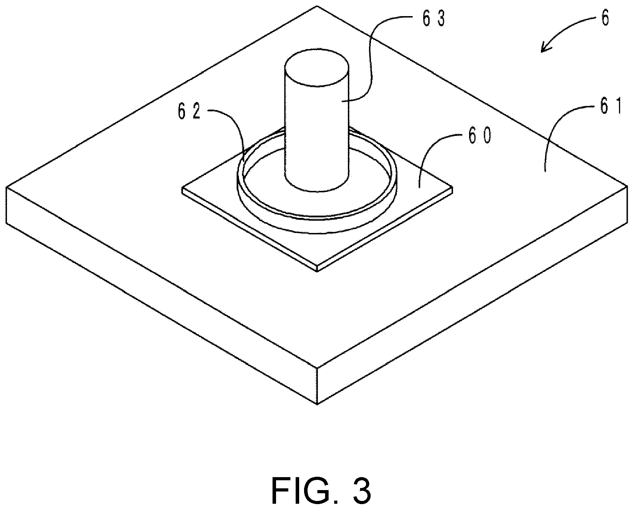

Fig. 3 is a schematic diagram of an experimental apparatus used in evaluating thermal insulation. As shown in Fig. 3, an experimental apparatus 6 includes a thermal insulation sheet 60, a hot plate 61, a ring member 62, and a contact thermometer terminal 63. The thermal insulation sheet 60 has a square shape with a side of 100 mm. The thermal insulation sheet 60 is placed on the upper surface of the hot plate 61 with the thermal insulation layer facing downward. The ring member 62 is made of polyacetal (POM) and has a ring shape with a height of 20 mm, an inner diameter of 80 mm, and a thickness of 5 mm. The ring member 62 is placed on the upper surface (surface on the base material side) of the thermal insulation sheet 60. The temperature of the hot plate 61 is adjusted to 85 °C.
Five minutes after the thermal insulation sheet 60 was placed on the upper surface of the hot plate 61, the contact thermometer terminal 63 was brought into contact with the central part of the upper surface of the thermal insulation sheet 60 for 10 seconds, and the temperature during that time was measured. After that, the contact thermometer terminal 63 was brought into contact with the upper surface of the hot plate 61 for 10 seconds, and the temperature during that time was measured. The temperature difference ($\Delta$T) was calculated by the following formula (i) using the maximum value among the temperatures measured at each.

$$\Delta T \ (°C) = (\text{maximum value of hot plate temperature}) - (\text{maximum value of thermal}$$

$$\text{insulation sheet temperature}) \ ... \ (i)$$

Based on the calculated value of $\Delta$T, thermal insulation was evaluated in three stages of high, medium, and low. That is, when $\Delta$T was 25 °C or higher, it was evaluated that thermal insulation was "high" (indicated by the mark

◎ in the evaluation column of Table 1 below), when $\Delta T$ was 15 °C or higher to lower than 25 °C, it was evaluated that thermal insulation was "medium" (indicated by the mark o in the same column), and when $\Delta T$ was lower than 15 °C, thermal insulation was evaluated as "low" (indicated by the mark × in the same column).

[Evaluation results]

Table 1 summarizes the configuration and evaluation results of the thermal insulation sheets.

[Table 1]

| | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 |
|---|---|---|---|---|---|---|---|---|---|---|---|---|---|---|---|
| Base material | Material | PET | PET | PET | PET | PET | PET | Polyimide | Aluminum-deposited PET | PPS | Cellophane | PET | PET | PET | PET |
| | Thickness [$\mu$m] | 12 | 12 | 50 | 12 | 12 | 12 | 12.5 | 12 | 12 | 25 | 12 | 12 | 75 | 12 |
| | Elongation (E1) [%] | 140 | 140 | 150 | 140 | 140 | 140 | 75 | 100 | 82 | 15 | 140 | 140 | 150 | 140 |
| Thermal insulation layer | Thickness [mm] | 0.3 | 1 | 0.3 | 0.3 | 0.3 | 0.3 | 0.3 | 0.3 | 0.3 | 0.3 | 0.3 | 0.3 | 0.3 | 0.3 |
| | Silica aerogel $D_{90}$ [$\mu$m] | 92 | 92 | 92 | 92 | 92 | 92 | 92 | 92 | 92 | 92 | 146 | 92 | 92 | 92 |
| | Binder elongation (E2) [%] | 430 | 430 | 430 | 250 | 430 | 430 | 430 | 430 | 430 | 430 | 430 | 280 | 430 | 87 |
| | Binder Tg [°C] | -30 | -30 | -30 | -12 | -30 | -30 | -30 | -30 | -30 | -30 | -30 | -5 | -30 | 72 |
| | Other components (parts by mass) — CMC | - | - | - | - | 3 | - | - | - | - | - | - | - | - | - |
| | Other components (parts by mass) — Glass fiber | - | - | - | - | - | 16 | - | - | - | - | - | - | - | - |
| Binder elongation/base material elongation (E2/E1) | | 3.1 | 3.1 | 2.9 | 1.8 | 3.1 | 3.1 | 5.7 | 4.3 | 5.2 | 28.7 | 3.1 | 2.0 | 2.9 | 0.6 |
| Evaluation | State of thermal insulation layer | ○ | ○ | ○ | ○ | ◎ | ◎ | ○ | ○ | ○ | ○ | ○ | ○ | × | × |
| | Bendability | ◎ | ○ | ○ | ○ | ◎ | ◎ | ◎ | ◎ | ◎ | ◎ | ○ | ○ | × | × |
| | Thermal insulation | ○ | ◎ | ○ | ○ | ○ | ○ | ○ | ○ | ○ | ○ | ○ | ○ | × | × |

EP 4 303 478 A1

As shown in Table 1, according to the thermal insulation sheets of Examples 1 to 12, it was confirmed that the state of the thermal insulation layer was good, the bendability was excellent, and thermal insulation was "medium" or higher, and the practicality was high. The following description is based on the thermal insulation sheet of Example 1. In Example 2, since the thickness of the thermal insulation layer was large, the bendability was slightly lowered, but the thermal insulation layer was improved. In Example 3, the thickness of the base material was large, and thus the bendability was slightly reduced. In Examples 4 and 12, since the Tg of the binder was high and the elongation at break was small, the bendability was slightly lowered. In Example 5, the incorporation of CMC imparted flexibility to the thermal insulation layer. Therefore, cracks were less likely to occur when the thermal insulation layer coating material was dried or when the thermal insulation sheet was bent, and the state and bendability of the thermal insulation layer were improved. In Example 6, glass fibers were incorporated. Glass fibers were physically entangled around silica aerogel and served to reinforce the thermal insulation layer. Therefore, cracks were less likely to occur when the thermal insulation layer coating material was dried or when the thermal insulation sheet was bent, and the state and bendability of the thermal insulation layer were improved. In Examples 7 to 10, the material of the base material was different, but the state of the thermal insulation layer, the bendability, and thermal insulation was all approximately the same as in Example 1. In Example 11, silica aerogel containing particles with a higher $D_{90}$, that is, a larger particle size than in Example 1, was used. Therefore, when the thermal insulation sheet is bent, cracks are unlikely to occur starting from the large particles, and thus it is considered that the bendability was slightly lowered. In this manner, it was confirmed that the thermal insulation sheet of the present disclosure was thin and excellent in flexibility such as bendability as well as thermal insulation.

On the other hand, in Comparative Example 1, the thickness of the base material is greater than 50 $\mu$m. Therefore, the heating from the base material side is not sufficient when drying the thermal insulation layer coating material, and heat is transferred unevenly in the coating film. As a result, the coating film swelled during drying, and many cracks occurred in the coating film (thermal insulation layer). Moreover, since the base material is thick, the rigidity is increased and the bending becomes difficult. Therefore, the stress applied to the thermal insulation layer during bending increased, and many cracks occurred. As a result, the heat transfer in the thermal insulation layer increased and thermal insulation decreased. In Comparative Example 2, a binder having a high Tg and a small elongation at break is used, and the elongation ratio of the binder to the base material is also small. Therefore, the thermal insulation layer lacked flexibility, and many cracks occurred both after drying and during bending. As a result, the heat transfer in the thermal insulation layer increased and thermal insulation decreased.

Industrial Applicability

The thermal insulation sheet of the present disclosure can be applied to various parts and members in the fields of automobiles, logistics, housing, industrial equipment, information communication equipment, and the like. The automotive field includes interior parts such as door trims, ceiling materials, instrument panels, console boxes, and armrests; and members such as hoses and pipes. In the field of logistics, there are thermally insulated containers used for transporting food, pharmaceuticals, and the like. The housing field includes building materials, wall materials, attic materials, window sashes, and the like. In the field of industrial equipment, thermal insulation members used in motors, sensors, and the like can be mentioned. In the field of information and communication equipment, thermal insulation members used in personal computers and smartphones can be mentioned. In addition, it is suitable for thermal insulation members for shoes such as insoles, and daily necessities such as cooler boxes.

Reference Signs List

10: thermal insulation sheet; 11: base material; 12: thermal insulation layer; 5: experimental apparatus; 50: thermal insulation sheet; 51: round bar member; 52: weight; 53: clip member; 6: experimental apparatus; 60: thermal insulation sheet; 61: hot plate; 62: ring member; 63: contact thermometer terminal.

**Claims**

1. A thermal insulation sheet comprising:

   a base material in the form of a sheet and having a thickness of 5 $\mu$m or more to 50 $\mu$m or less; and
   a thermal insulation layer arranged on at least one surface of the base material, wherein
   the thermal insulation layer comprises:

      a porous structure that has a skeleton composed of a plurality of particles connected to each other, has pores therein, and has a hydrophobic site at least on a surface out of the surface and inside of the porous structure, and

a binder that connects the porous structures with each other and has an elongation at break of 200% or more.

2. The thermal insulation sheet according to claim 1, wherein the elongation at break of the base material is 150% or less.

3. The thermal insulation sheet according to claim 1 or 2, wherein
a ratio (E2/E1) of the elongation at break (E2) of the binder to the elongation at break (E1) of the base material is 1.33 or more to 30 or less.

4. The thermal insulation sheet according to any one of claims 1 to 3, wherein
the thermal insulation layer has a thickness of 0.2 mm or more to 1.2 mm or less.

5. The thermal insulation sheet according to any one of claims 1 to 4, wherein
the thermal insulation layer is produced using the porous structure having a 90% diameter ($D_{90}$) of 150 $\mu$m or less in a particle size distribution.

6. The thermal insulation sheet according to any one of claims 1 to 5, wherein
the base material is a resin film, a cellophane film, a metal film, or a metal-deposited film.

7. The thermal insulation sheet according to any one of claims 1 to 6, wherein
the binder contains one or more selected from resin and rubber, and the binder has a glass transition temperature (Tg) of -20 °C or lower.

8. The thermal insulation sheet according to any one of claims 1 to 7, wherein
the thermal insulation layer further contains one or more selected from a thickener and a reinforcing fiber.

9. The thermal insulation sheet according to any one of claims 1 to 8, wherein
a content of the porous structure in the thermal insulation layer is 80% by volume or more to 96% by volume or less when an entirety of the thermal insulation layer is 100% by volume.

10. The thermal insulation sheet according to any one of claims 1 to 9, wherein
the porous structure is a silica aerogel having a skeleton composed of a plurality of fine silica particles connected to each other.

**Amended claims under Art. 19.1 PCT**

1. A thermal insulation sheet comprising:

a base material in the form of a sheet and having a thickness of 5 $\mu$m or more to 50 $\mu$m or less; and
a thermal insulation layer arranged on at least one surface of the base material, wherein
the thermal insulation layer comprises:

a porous structure that has a skeleton composed of a plurality of particles connected to each other, has pores therein, and has a hydrophobic site at least on a surface out of the surface and inside of the porous structure, and
a binder that connects the porous structures with each other and has an elongation at break of 200% or more; and

a ratio (E2/E1) of the elongation at break (E2) of the binder to the elongation at break (E1) of the base material is 3.1 or more to 30 or less.

2. The thermal insulation sheet according to claim 1, wherein the elongation at break of the base material is 150% or less.

3. (canceled)

4. The thermal insulation sheet according to any one of claims 1 to 3, wherein
the thermal insulation layer has a thickness of 0.2 mm or more to 1.2 mm or less.

**5.** The thermal insulation sheet according to any one of claims 1 to 4, wherein
the thermal insulation layer is produced using the porous structure having a 90% diameter ($D_{90}$) of 150 $\mu$m or less in a particle size distribution.

**6.** The thermal insulation sheet according to any one of claims 1 to 5, wherein
the base material is a resin film, a cellophane film, a metal film, or a metal-deposited film.

**7.** The thermal insulation sheet according to any one of claims 1 to 6, wherein
the binder contains one or more selected from resin and rubber, and the binder has a glass transition temperature (Tg) of -20 °C or lower.

**8.** The thermal insulation sheet according to any one of claims 1 to 7, wherein
the thermal insulation layer further contains one or more selected from a thickener and a reinforcing fiber.

**9.** The thermal insulation sheet according to any one of claims 1 to 8, wherein
a content of the porous structure in the thermal insulation layer is 80% by volume or more to 96% by volume or less when an entirety of the thermal insulation layer is 100% by volume.

**10.** The thermal insulation sheet according to any one of claims 1 to 9, wherein
the porous structure is a silica aerogel having a skeleton composed of a plurality of fine silica particles connected to each other.

FIG. 1

FIG. 2

# FIG. 3

## INTERNATIONAL SEARCH REPORT

| International application No. |
| --- |
| **PCT/JP2022/022256** |

**A. CLASSIFICATION OF SUBJECT MATTER**

*F16L 59/02*(2006.01)i
FI: F16L59/02

According to International Patent Classification (IPC) or to both national classification and IPC

**B. FIELDS SEARCHED**

Minimum documentation searched (classification system followed by classification symbols)

F16L59/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2015-68465 A (PANASONIC INTELLECTUAL PROPERTY MANAGEMENT CO., LTD.) 13 April 2015 (2015-04-13)<br>paragraphs [0001]-[0110], fig. 1-5 | 1-10 |
| Y | JP 2020-122544 A (SUMITOMO RIKO CO LTD) 13 August 2020 (2020-08-13)<br>paragraphs [0019]-[0068], fig. 1-5 | 1-10 |
| Y | WO 2013/141189 A1 (IMAE INDUSTRY CO., LTD.) 26 September 2013 (2013-09-26)<br>paragraphs [0017]-[0100], fig. 1-7 | 8-10 |
| Y | JP 2019-65264 A (SUMITOMO RIKO CO LTD) 25 April 2019 (2019-04-25)<br>paragraphs [0014]-[0043] | 8-10 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 July 2022** | **09 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

| International application No. |
| --- |
| **PCT/JP2022/022256** |

| Patent document<br>cited in search report | | | Publication date<br>(day/month/year) | Patent family member(s) | | | Publication date<br>(day/month/year) |
| --- | --- | --- | --- | --- | --- | --- | --- |
| JP | 2015-68465 | A | 13 April 2015 | WO | 2015/045211 | A1 | |
| JP | 2020-122544 | A | 13 August 2020 | (Family: none) | | | |
| WO | 2013/141189 | A1 | 26 September 2013 | US | 2014/0057083 | A1 | |
| | | | | paragraphs [0024]-[0113], fig.<br>1-7 | | | |
| | | | | EP | 2829527 | A1 | |
| JP | 2019-65264 | A | 25 April 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015528071 W
- JP 2020122544 A

- JP 2020139560 A